# FASCICULE DE BREVET EUROPEEN

(11) **EP 1 401 746 B1**
(45) Date de publication et mention de la délivrance du brevet: **26.05.2010**
(21) Numéro de dépôt: 02755090.4
(22) Date de dépôt: 24.06.2002
(51) Int. Cl.: B65G 27/12

(54) **DISPOSITIF DE TRANSPORT DE PIECES POUR L'ALIMENTATION DE MACHINES**
VORRICHTUNG ZUM ZUFÜHREN VON TEILEN ZU EINER MASCHINE
DEVICE FOR TRANSPORTING PARTS FOR SUPPLYING MACHINES

(30) Priorité: 27.06.2001 FR 0108450
(43) Date de publication de la demande: 31.03.2004
(73) Titulaire: Gourjon, Florian Christophe, 74370 Villaz (FR); Gourjon, Stéphane Laurent, 74370 Villaz (FR)
(72) Inventeur: Goujon, Didier, . (FR)
(74) Mandataire: Gasquet, Denis
(86) Numéro de dépôt international: PCT/FR2002/002185
(87) Numéro de publication internationale: WO 2003/002435

(56) Documents cités:
- FR-A- 2 379 454
- US-A- 2 991 872
- US-A- 4 362 455
- US-A- 4 724 949

## Description

La présente invention concerne un dispositif de transport de pièces pour l'alimentation de machines destiné à permettre l'alimentation en pièces de machines, ou de manière plus générale destiné à assurer tous types de transport de pièces dans les process industriels.

A l'heure actuelle, on connaît plusieurs types d'appareillages destinés au transport des pièces et notamment les appareils destinés à l'alimentation des machines dont les plus couramment utilisés sont les appareils à bande transporteuse formés par un tapis ou une bande entraînée par des galets ou les dispositifs de type à rail vibrant, appelé généralement de type vibrateur.

Les dispositifs à bande transporteuse présentent des inconvénients au niveau de leur encombrement et ils ne peuvent donc pas être installés dans de nombreuses situations. Ils peuvent également présenter certains inconvénients liés à l'alimentation en pièces proprement dites, c'est-à-dire à la transition qui s'effectue en bout de bande entre le tapis de transport et la machine alimentée.

Les appareils à vibrateur fonctionnent sur un principe relativement simple qui consiste à déplacer alternativement le rail axialement tout en faisant décoller les pièces transportées en l'air pendant le retour en position arrière du rail. Ainsi, ces vibrateurs présentent des mouvements oscillants avec une composante verticale destinée à faire décoller les pièces et des composantes horizontales pour le déplacement axial du rail. De cette manière, les pièces ne restent au contact du rail que pendant son déplacement axial vers l'avant. Toutefois, ces rails vibrants présentent de nombreux inconvénients liés à leur conception et à leur utilisation. En effet, ils ne permettent pas de transporter des pièces à des vitesses rapides et sont ainsi limités pour certaines applications. De plus, certaines pièces destinées à être transportées sont fragiles et sont donc susceptibles d'être endommagées lors de leur déplacement le long du rail par la répétition des chocs dus aux oscillations verticales dudit rail. Par ailleurs, certaines pièces ne peuvent pas non plus être transportées par de tels rails en raison de leur forme. En effet, les pièces, par exemple, trop fines se chevauchent et se coincent entre elles au cours de leur parcourt ; par ailleurs, les pièces trop lourdes nécessitent des vibrateurs puissants, ce qui perturbe le fonctionnement du reste de la machine. En outre, ces appareils à rail vibrant présentent l'inconvénient de ne pouvoir transporter les pièces que dans un seul sens contrairement aux dispositifs à bande transporteuse et ils présentent également des problèmes en sortie de rail où certaines pièces peuvent se retrouver en porte-à-faux avec le risque d'être endommagées par le débattement longitudinal de l'extrémité du rail.

On connaît aussi par la divulgation faite par le brevet FR 2379454, un dispositif de transport de pièce comportant une came d'entraînement coopérant avec un galet solidaire en déplacement de l'organe transporteur, afin que le mouvement soit un mouvement de translation alternatif engendré par la rotation de la came d'entraînement. Cette came comporte un profil permettant un simple déplacement avant-arrière du couloir de transport. L'inconvénient de ce dispositif est de sa came à simple profil engendre des forts à-coups pouvant endommager certaines pièces à transporter et comporte aussi l'inconvénient de ne pas pouvoir régler le dispositif avec précision.

Ainsi, la présente invention a pour objectif de résoudre les inconvénients précités des appareils d'alimentation de pièces à l'aide de moyens simples, fiables, peu onéreux et faciles à mettre en oeuvre. Elle propose ainsi un dispositif d'alimentation de pièces qui permet un transport rapide des pièces, susceptible de fonctionner dans les deux sens, capable de transporter des pièces fragiles et des pièces légères tout en ayant un faible encombrement, ce qui facilite son adaptation aux différentes situations rencontrées dans les process industriels.

Selon sa caractéristique principale, le dispositif de transport de pièces est du type comportant un organe transporteur sur lequel sont destinées à être disposées les pièces à transporter, ledit organe transporteur étant monté mobile par rapport au bâti du dispositif pour être au moins animé d'un mouvement alternatif, qui s'effectue dans le plan dans lequel les pièces sont transportées, par un dispositif d'entraînement et il est caractérisé en ce que le dispositif d'entraînement comporte au moins une came d'entraînement, coopérant avec au moins un galet solidaire de l'organe transporteur,pour lui donner son mouvement

Selon un mode de réalisation préféré du dispositif de transport de pièces de l'invention, l'organe transporteur est un rail longitudinal dont le mouvement dans le plan de déplacement des pièces est un mouvement de translation alternatif engendré par la rotation de la came d'entraînement.

Selon un autre mode de réalisation du dispositif de transport de pièces de l'invention, l'organe transporteur est un rail de forme courbe, circulaire ou hélicoïdal dont le mouvement dans le plan de déplacement des pièces est un mouvement de rotation alternatif engendré par la rotation de la came d'entraînement.

Selon une caractéristique complémentaire du dispositif de transport de pièces de l'invention, celui-ci est caractérisé en ce que l'organe transporteur est porté par un support de rail qui porte un galet qui l'entraîne en translation selon l'axe longitudinal de déplacement des pièces lorsqu'il coopère avec la came rotative.

Selon une autre caractéristique du dispositif de transport de pièces de l'invention, celui-ci est caractérisé en ce qu'il comporte un dispositif de motorisation qui entraîne la came en rotation autour de son axe de révolution, ladite rotation de la came provoquant, grâce à la forme spécifique de sa surface de contact, le déplacement longitudinal alternatif du support de rail en coopérant avec le galet.

Selon le mode de réalisation préféré du dispositif de transport de pièces, l'axe de rotation de la came et l'axe de rotation du galet d'entraînement sont parallèles.

Selon une autre caractéristique du dispositif de transport de pièces de l'invention, celui-ci est caractérisé en ce que la came présente une courbe de surface développée qui comporte une première zone dite d'accélération, très courte, puis une zone dite d'avance où le rayon de la came augmente de manière constante sur son secteur angulaire, elle comporte ensuite une zone de décélération courte, avant une zone dite de recul où le rayon diminue.

Selon une caractéristique complémentaire du dispositif de transport de pièces, le mouvement d'avance du rail correspondant aux zones d'accélération, d'avance et de décélération de la surface développée représente un secteur angulaire de la came compris entre 200° et 300° tandis que la zone dite de recul représente un secteur angulaire compris entre 60° et 160°.

Selon un mode de réalisation du dispositif de transport de pièces de l'invention, lorsque la came parcourt un tour complet, le galet et donc le rail subissent un mouvement vers l'avant correspondant aux zones d'accélération, d'avance et de décélération de la came pendant environ les deux tiers du tours, puis un mouvement plus brusque de recul pendant le dernier tiers du tour, ce mouvement de rail permet, grâce à la zone d'accélération, d'amener le rail rapidement à la vitesse de déplacement relative des pièces (par rapport au bâti) pour les accélérer encore avant de les déplacer à vitesse constante pendant la zone d'avance pour ensuite les laisser glisser pendant le freinage ou zone de décélération, puis le recul du rail qui s'effectue rapidement avant de recommencer le cycle.

Selon une caractéristique complémentaire du dispositif de transport de pièces, la came rotative est commandée par un dispositif de motorisation qui permet sa rotation dans les deux sens en fonction du choix de l'utilisateur.

Selon un autre mode de réalisation, la came est prise en sandwich entre deux galets, tandis-que ladite came est constituée de deux cames superposées, une première came ou came supérieure, avec la quelle coopère un premier galet (6a), et une deuxième came ou came inférieure, avec laquelle coopère un deuxième galet.

D'autres caractéristiques et avantages de l'invention se dégageront de la description qui va suivre en regard des dessins annexés qui ne sont donnés qu'à titre d'exemples non limitatifs.
Les figures 1 à 6 illustrent un premier mode de réalisation du dispositif de transport de pièces de l'invention.
La figure 1 représente le dispositif en perspective.
La figure 2a représente le dispositif en vue latérale.
La figure 2b illustre le dispositif de transport de pièces en vue de face.
La figure 3 représente une vue éclatée du-dispositif de transport.
La figure 4 montre en coupe le mécanisme du rail.
La figure 5 illustre la came pivotante en vue de dessous.
La figure 6 représente schématiquement la surface de contact de la came en développé.
Les figures 7 à 10 illustrent un deuxième mode de réalisation

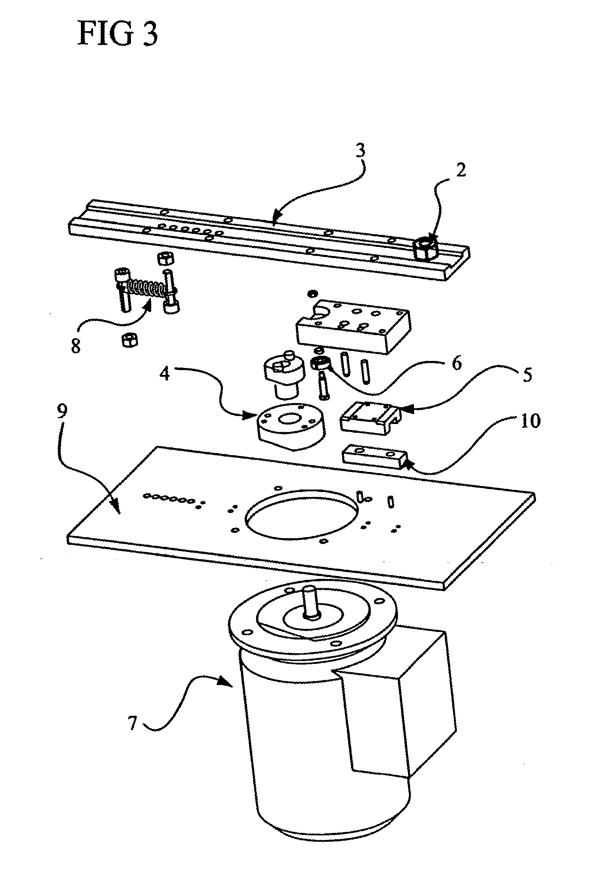

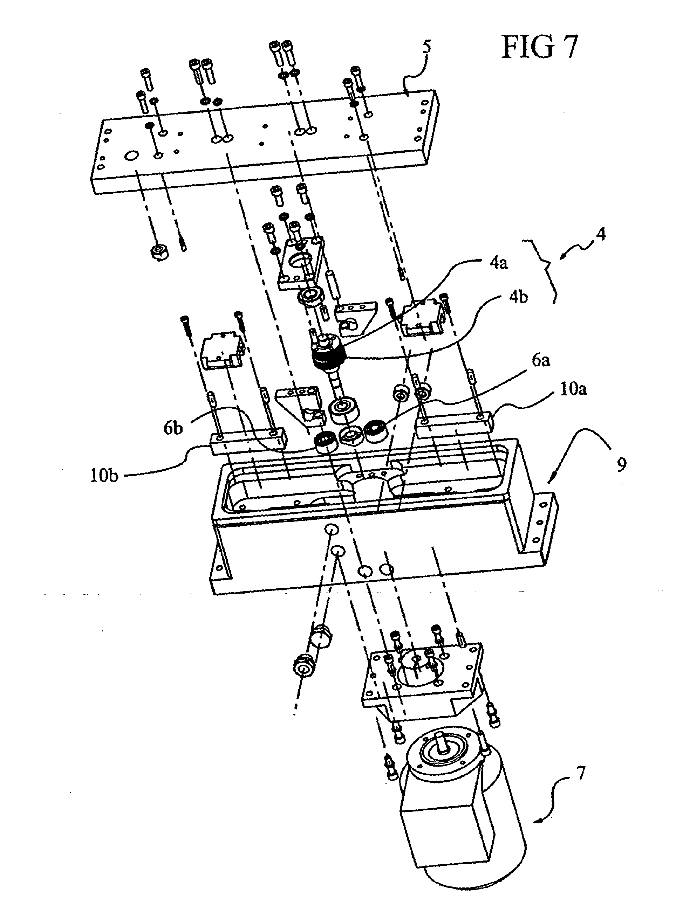

La figure 7 est une vue en perspective similaire à la figure 3.

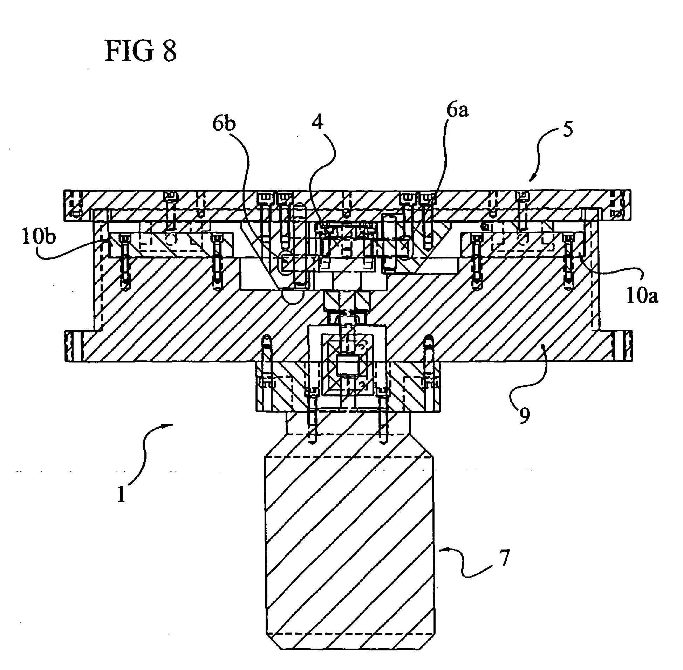

La figure 8 est une vue latérale en coupe.

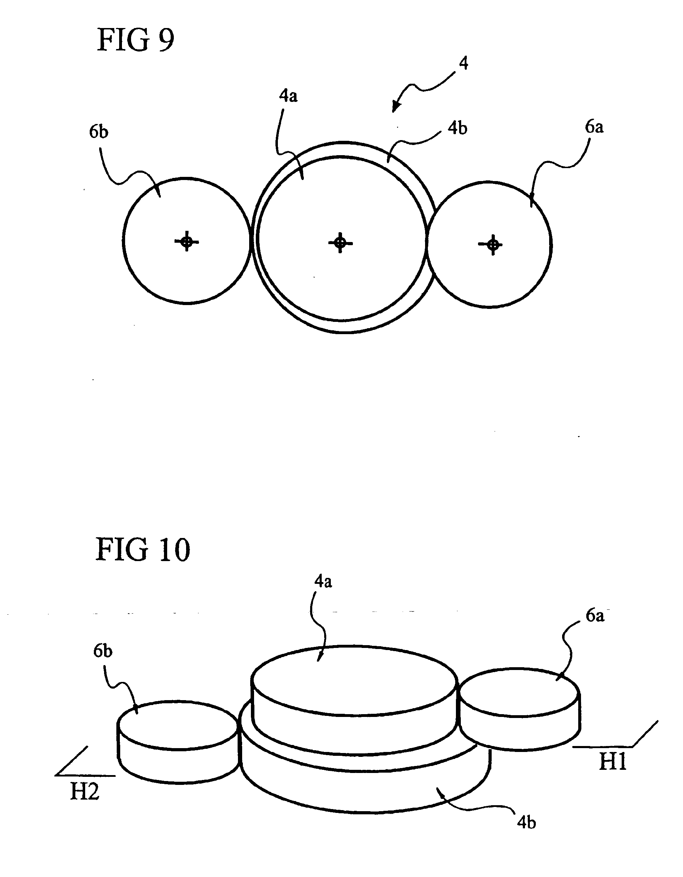

La figure 9 est une illustration en vue de dessus, montrant les cames et les galets.
La figure 10 est une vue en perspective montant les cames rte les galets.

L'invention concerne un dispositif de transport de pièces, portant la référence générale (1), ce dispositif est destiné à transporter des pièces (2) pour alimenter une machine outil ou autre dans le cadre d'un process industriel. Il comporte un organe transporteur (3) sur lequel sont disposées les pièces à transporter (2), ledit organe étant destiné à mettre en mouvement les pièces dans le plan (P) dans lequel elles se trouvent, pour les déplacer par rapport à lui-même.

Selon l'invention, l'organe transporteur (3) est mobile par rapport au bâti du dispositif pour être mis en mouvement dans le plan (P) par un dispositif d'entraînement (DE) comportant au moins une came (4). Le mouvement de l'organe transporteur (3) s'effectue uniquement dans le plan (P) dans lequel les pièces (2) sont déplacées. Ainsi, les pièces (2) sont déplacées sur l'organe transporteur (3) par glissement lors des mouvements dudit organe.

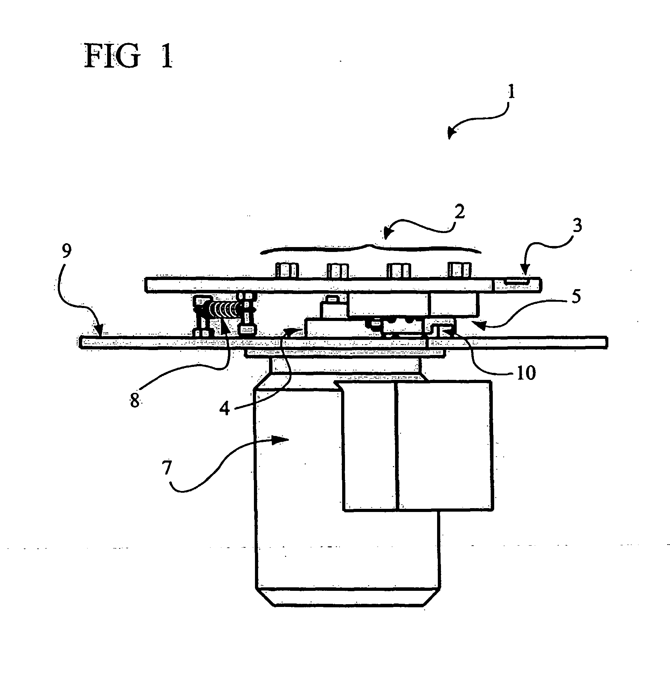

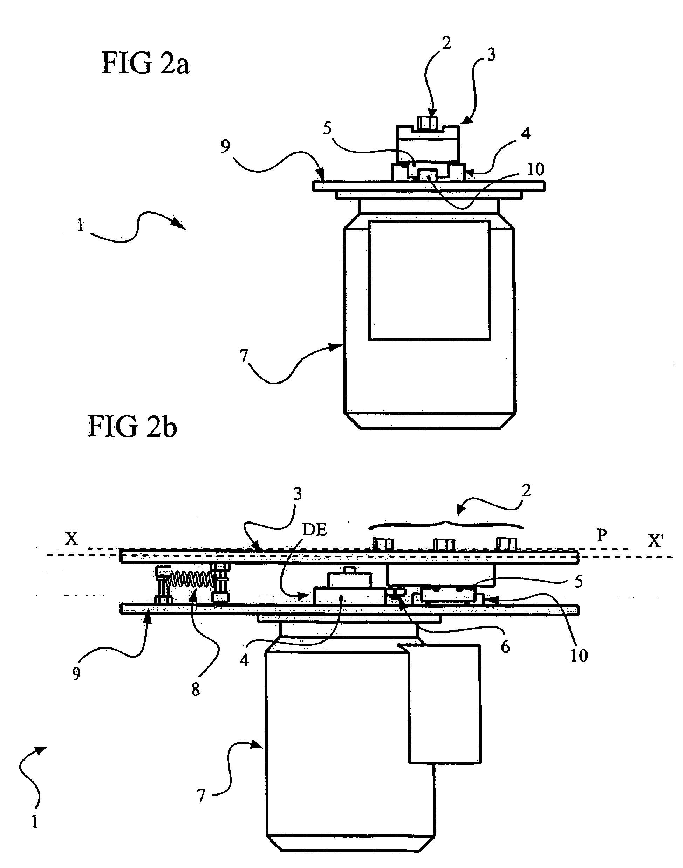

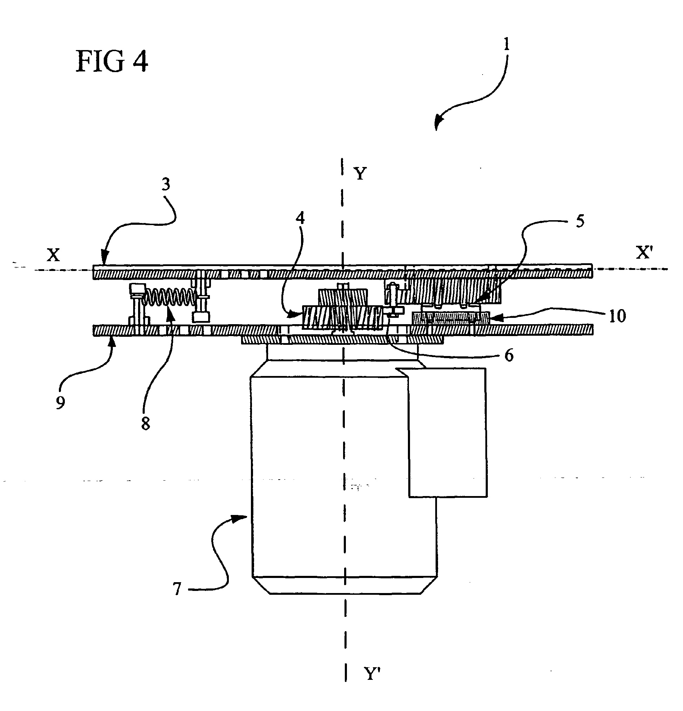

Selon le premier mode de réalisation du dispositif de transport de pièces (1) de l'invention et comme le montrent les figures 1 à 5, l'organe transporteur (3) est avantageusement constitué par un rail longitudinal dont le mouvement dans le plan (P) est un mouvement de translation alternatif engendré par la rotation de la came (4). Ce mouvement de translation alternatif du rail (3) provoque le déplacement par glissement des pièces (2) le long du rail grâce à la configuration particulière des paramètres mécaniques (accélération, vitesse) du mouvement alternatif obtenu grâce à la came (4) et aux paramètres physiques des éléments constitutifs (coefficient de frottement). On peut noter qu'un tel dispositif pourrait utiliser un organe transporteur différent animé d'un autre type de mouvement.

Ainsi, selon un mode de réalisation non représenté, le mouvement de l'organe transporteur est un mouvement de rotation alternatif. Il est donc avantageusement constitué par un rail de forme courbe, circulaire ou hélicoïdal qui est animé d'un mouvement rotatif alternatif d'amplitude réduite, ce mouvement étant engendré par la rotation d'une came d'entraînement similaire à celle du premier mode de réalisation qui coopère avec une pente solidaire d'un support de rail circulaire articulé autour d'un axe fixe.

Selon le premier mode de réalisation du dispositif de transport de pièces (1), le rail transporteur (3) sur lequel sont disposées les pièces à transporter (2) est porté par un support de rail (5) qui porte un galet (6). Ce galet (6) est monté sur le support (5) pour pouvoir l'entraîner en translation selon l'axe longitudinal (XX') lorsqu'il coopère avec la came rotative (4) comme le montrent les figures 1, 3 et 4.

Le dispositif de transport de pièces (1) comporte un dispositif de motorisation (7) qui entraîne la came (4) en rotation autour de son axe de révolution (YY'). La rotation de la came (4) provoque, grâce à sa forme spécifique, le déplacement longitudinal alternatif du support de rail (5) en coopérant avec le galet (6). On peut noter que les axes de rotation de la came et du galet sont parallèles, réduisant ainsi l'usure due au frottement lors de leur coopération.

Il va de soi que le dispositif pourrait présenter une configuration différente concernant la coopération de la came et du support de rail. L'axe de rotation de la came pourrait être positionné différemment tandis que celle-ci agirait sur un plan incliné du support et non plus sur un galet, par exemple.

Selon le mode de réalisation illustré aux figure 1 à 6 du dispositif d'alimentation de pièces (1), celui-ci comporte des moyens de rappel destinés à solliciter le galet (6) pour le maintenir en permanence au contact de la came (4) afin que le mouvement alternatif du rail (3) corresponde exactement à la courbe développée de la surface au contact de la came (4). Ces moyens de rappel peuvent être de plusieurs types comme être formés par un ressort de traction (8). On peu noter que ce ressort (8) peut agir directement entre le bâti (9) sur lequel est fixé le moteur (7) et le rail (3), tandis que le support de rail (5) est monté coulissant sur un guide (10) du bâti pour pouvoir être sollicité vers la came (4) par l'intermédiaire du rail transporteur (3) et du ressort (8). On notera que la coopération du support de rail (5) avec le guide (10) pourrait être réalisée de façon plus simple par deux lames latérales souples qui assureraient la liaison entre le bâti (9) et le rail vibrant (3).

Le dispositif d'alimentation de pièces (1) de l'invention, le rail (3) est monté coulissant sur le bâti (9) par l'intermédiaire de son support (5) et du guide (10). Son mouvement est un mouvement plan de translation dont les accélérations et les ralentissements sont commandés exclusivement par la pente de la surface externe ou surface de contact de la came (4).

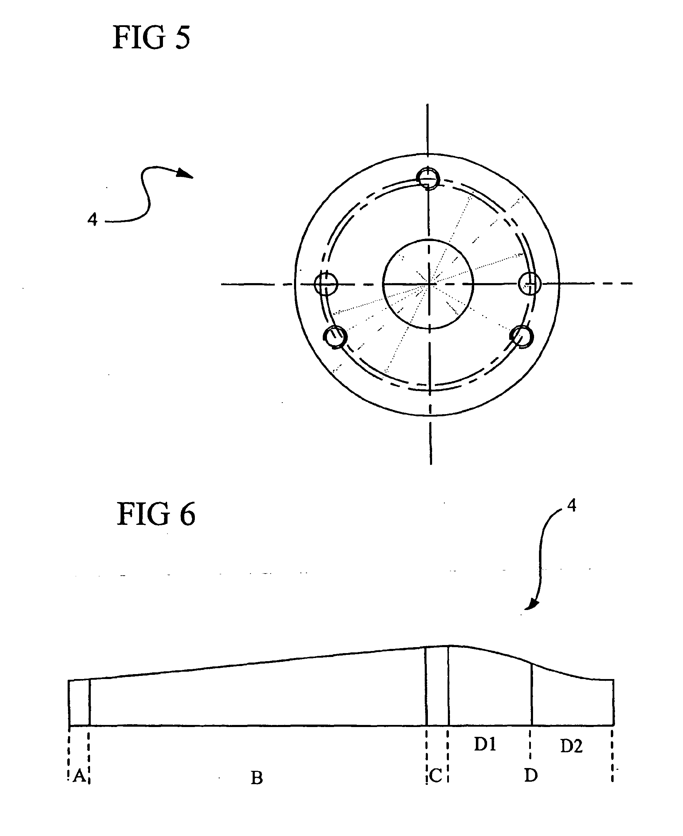

Selon le mode de réalisation illustré, la came (4) présente une courbe de surface développée telle que celle illustrée figure 6. Lorsqu'on par du point 0, elle comporte une première zone (a) dite d'accélération, très courte, représentant un secteur angulaire inférieur à 20°, puis une zone dite d'avance (B) pendant laquelle le rail (3) se déplace à vitesse constante, le rayon de la came augmentant de manière sensiblement constante sur un secteur angulaire sensiblement égale à 220°, de manière à ce que le rail se déplace avec une accélération faible voir nulle. Elle comporte ensuite une zone de décélération (C) courte, dont le secteur angulaire est inférieur à 20°, avant une zone dite de recul (D), recul qui s'effectue avec une forte accélération, durant une première moitié du secteur angulaire (D1), et avec un ralentissement, dans une deuxième partie (D2), avant de revenir au point initial de la came. Ainsi, on peut remarquer que le mouvement d'avance du rail correspondant aux zones (A, B, C) représente un secteur angulaire de la came compris entre 200° et 300° tandis que la zone dite de recul (D) est comprise entre 60° et 160°. Selon le mode de réalisation préféré du dispositif de transport, l'ensemble des zones (A, B, C) représente un secteur angulaire supérieur à 240°.

Ainsi, lorsque la came parcourt un tour complet, le galet (6) et donc le rail (3) subissent un mouvement vers l'avant correspondant aux zones (A, B, C) de la came pendant environ les deux tiers du tour, puis un mouvement plus rapide de recul pendant le dernier tiers du tour. Ce mouvement du rail permet, grâce à la zone d'accélération (A), d'amener le rail (3) rapidement à la vitesse de déplacement relative (par rapport au bâti) des pièces (2) pour les accélérer encore avant de la déplacer à vitesse constante pendant la zone de décélération (C), puis le recul (zone D) du rail qui s'effectue rapidement avant de recommencer le cycle. On peut noter que les pentes de la surface de contact de la came sont spécifiquement calculées pour que, lors du recul du rail (3) qui s'effectue brusquement, les pièces (2) continuent d'avancer avec une vitesse relative par rapport au bâti, avant d'être reprises par le rail dans la zone d'accélération (A) lorsqu'il atteint leur vitesse.

On peut noter, comme le montre la figure 5, que la came possède des trous pour le passage de goupilles, ces trous permettant le positionnement exact de ladite came sur la machine outil avec un positionnement exact et reproductible de la ligne de référence ou point 0 de la came. Cette came peut de plus être montée sur le dispositif de motorisation de manière amovible pour pouvoir être interchangeable, par exemple, permettant ainsi l'adaptation du dispositif de transport aux différentes pièces et aux différentes contraintes des machines alimentées.

Les figures 7 à 10 représentent un deuxième mode de réalisation de l'invention.

Pour des raisons de clarté, pour ce deuxième mode de réalisation, les mêmes éléments ont été désignés par des références identiques à celles du premier mode de réalisation et le lecteur pourra donc facilement, au vue des figures du deuxième mode de réalisation se reporter à la description faite du premier mode de réalisation.

Selon ce mode de réalisation le moyen de rappel du premier mode de réalisation, destiné à maintenir le galet (6) en contact avec la came (4), et constitués par le ressort (8), a été remplacé par une structure à deux galets (6a, 6b) et deux cames (4a, 4b).

Ainsi, la came (4) est constituée de deux cames superposées. A savoir une première came ou came supérieure (4a), et une deuxième came pu came inférieure (4b). Les deux cames (4a et 4b) sont solidaires et montées sur la'arbre de sortie du moteur (7).

Par ailleurs le support de rail (5) porte deux galets (6a, 6b) destinés à coopérer avec les cames (4a, 4b). A savoir, un premier galet (6a) qui coopère avec la première came (4a), et un deuxième galet (6b) qui coopère avec la deuxième came (4b). En conséquence les deux galets sont disposés de part et d'autre des deux cames et le plan P passant par le centre des galets passe par l'axe de pivotement (Y, Y') des deux cames constituée. Bien entendu le plan horizontal (H1) général du premier galet est disposé dans le plan horizontal général de la première came, tandis-que le plan horizontal (H2) général du deuxième galet est disposé dans le plan horizontal général de la deuxième came. Le plan horizontal (H1) général du premier galet et donc le plan horizontal général de la première came, est disposé au-dessus du plan horizontal (H2) général du deuxième galet et donc du plan horizontal général de la deuxième came.

On adonc compris que l'ensemble des came est pris en sandwich entre les deux galets, ce qui permet d'assurere les deux sens de déplacement du support de rail sans système de ressort tel que cela est prévu dans le premier mode de réalisation. Grâce au dispositif à deux galets, l'accélération est maîtrisée et l'inertie des pièces en mouvement n'a pas d'incidence néfaste. Et ce sans frottements parasites, que peut engendré un ressort un peu raide.

Par ailleurs, on peut noter que le dispositif de motorisation qui permet de faire tourner la came peut avantageusement fonctionner dans les deux sens. Ainsi, lorsque la came d'entraînement tourne dans un sens, les pièces avancent, tandis que l'inversion du sens de rotation de la came provoque le recul des pièces. On peut noter aussi que le dispositif de motorisation peut avantageusement permettre le réglage de la vitesse de rotation de la came.

On peut noter également que le rail peut être recouvert d'un revêtement dont le coefficient de frottement est adapté à la gamme de pièces qu'il est destiné à transporter.

## Revendications

1. Dispositif de transport de pièces (1) du type comportant un organe transporteur (3) sur lequel sont destinées à être disposées les pièces à transporteur (2), ledit organe transporteur (3) étant monté mobile par rapport au bâti du dispositif pour être au moins animé d'un mouvement alternatif, qui s'effectue dans le plan (P) dans lequel les pièces (2) sont transportées, par un dispositif d'entraînement (DE), comportant au moins une came d'entraînement (4, 4a, 4b) coopérant avec au moins un galet (6, 6a, 6b) solidaire en déplacement de l'organe transporteur, afin que le mouvement dans le plan (P) soit un mouvement de translation alternatif engendré par la rotation de la came d'entraînement (4, 4a, 4b) **caractérisé en ce que** la came d'entraînement (4, 4a, 4b) présente une courbe de surface développée qui comporte une première zone (A) dite accélération, très courte, puis une zone dite d'avance (B) où le rayon de la came d'entraînement (4, 4a, 4b) augmente de manière constante sur son secteur angulaire, elle comporte ensuite une zone de décélération (C) courte, avant une zone dite de recul (D) où le rayon diminue..

2. Dispositif de transport de pièces (1) selon la revendication 1, **caractérisé en ce que** l'organe transporteur est un rail (3) de forme courbe, circulaire ou hélicoïdal dont le mouvement dans le plan (P) est un mouvement de rotation alternatif engendré par la rotation de la came d'entraînement (4, 4a, 4b).

3. Dispositif de transport de pièces (1) selon l'une quelconque des revendications précédentes, **caractérisé en ce que** l'organe transporteur (3) est porté par un support (5) de l'organe transporteur (3) qui porte un galet (6, 6a, 6b) qui l'entraîne en translation selon l'axe longitudinal (XX') lorsqu'il coopère avec la came d'entraînement (4, 4a, 4b).

4. Dispositif de transport de pièces (1) selon la revendication 3, **caractérisé en ce qu'**il comporte un dispositif de motorisation (7) qui entraîne la came d'entraînement (4, 4a, 4b) en rotation autour de son axe de révolution (YY'), ladite rotation de la came d'entraînement (4, 4a, 4b)) provoquant, grâce à la forme spécifique de sa surface de contact, le déplacement longitudinal alternatif du support (5) de l'organe transporteur (3) en coopérant avec le galet (6, 6a, 6b).

5. Dispositif de transport de pièces (1) selon la revendication 3 ou la revendication 4, **caractérisé en ce que** l'axe de rotation (YY') de la came d'entraînement (4, 4a, 4b) et l'axe de rotation du galet d'entraînement (6) sont parallèles.

6. Dispositif de transport de pièces (1) selon l'une quelconque des revendications précédentes, **caractérisé en ce que** le mouvement d'avance du rail (3) correspondant aux zones (A, B, C) de la surface développée représente un secteur angulaire de la came d'entraînement (4, 4a, 4b) compris entre 200° et 300° tandis que la zone dite de recul (D) représente un secteur angulaire compris entre 60° et 160°.

7. Dispositif de transport de pièces (1) selon l'une quelconque des revendications précédentes, **caractérisé en ce que** lorsque la came d'entraînement (4, 4a, 4b) parcourt un tour complet, le galet (6) et donc le rail (3) subissent un mouvement vers l'avant correspondant aux zones (A, B, C) de la came d'entraînement (4, 4a, 4b) pendant environ les deux tiers du tour, puis un mouvement plus brusque de recul pendant le dernier tiers du tour, ce mouvement du rail (3) permet, grâce à la zone d'accélération (A), d'amener le rail (3) rapidement à la vitesse de déplacement relative des pièces (2) (par rapport au bâti) pour les accélérer encore avant de les déplacer à vitesse constante pendant la zone d'avance (B) pour ensuite les laisser glisser pendant le freinage ou zone de décélération (C), puis le recul (zone D) du rail qui s'effectue rapidement avant de recommencer le cycle.

8. Dispositif de transport de pièces (1) selon l'une quelconque des revendications précédentes, **caractérisé en ce que** la came d'entraînement (4, 4a, 4b) est commandée par un dispositif de motorisation (7) qui permet sa rotation dans les deux sens en fonction du choix de l'utilisateur.

9. Dispositif de transport de pièces (1) selon l'une quelconque des revendications précédentes, **caractérisé en ce que** la came d'entraînement (4, 4a, 4b) est prise en sandwich entre deux galets (6a, 6b).

10. Dispositif de transport de pièces (1) selon la revendication 9, **caractérisé en ce que** la came d'entraînement (4) est constituée de deux cames superposées, une première came ou came supérieure (4a), avec laquelle coopère un premier galet (6a), et une deuxième came ou came inférieure (4b) avec laquelle coopère un deuxième galet (6b).

## Claims

1. Device for conveying parts (1), of the type having a conveying component (3) on which the parts to be conveyed (2) are intended to be disposed, the said conveying component (3) being mounted so as to be movable in relation to the frame of the device in order to be at least actuated with an alternating movement, which is carried out in the plane (P) within which the parts (2) are conveyed, by a driving device (DE) comprising at least one driving cam (4, 4a, 4b) cooperating with at least one roller (6, 6a, 6b) which is integral in displacement with the conveying component, so that the movement in the plane (P) is an alternating translational movement produced by the rotation of the driving cam (4, 4a, 4b), **characterised in that** the driving cam (4, 4a, 4b) has a developed surface curve which comprises a first, very short so-called "accelerating zone" (A), then a so-called "feeding zone" (B) in which the radius of the driving cam (4, 4a, 4b) increases constantly over its angular sector, and it then comprises a short decelerating zone (C) before a so-called "zone of backward movement" (D) in which the radius decreases.

2. Device for conveying parts (1) according to claim 1, **characterised in that** the conveying component is a rail (3) of curved, circular or helical shape, whose movement in the plane (P) is an alternating rotational movement produced by the rotation of the driving cam (4, 4a, 4b).

3. Device for conveying parts (1) according to any of the preceding claims, **characterised in that** the conveying component (3) is carried by a support (5) for said conveying component (3) which carries a roller (6, 6a, 6b) which drives it in translation along the longitudinal axis (XX') when it cooperates with the driving cam (4, 4a, 4b).

4. Device for conveying parts (1) according to claim 3, **characterised in that** it comprises a motorising device (7) which drives the driving cam (4, 4a, 4b) in rotation about its axis of revolution (YY'), the said rotation of the driving cam (4, 4a, 4b) bringing about, because of the specific shape of its contact surface, the alternating longitudinal displacement of the support (5) for the conveying component (3) by cooperating with the roller (6, 6a, 6b).

5. Device for conveying parts (1) according to claim 3 or 4, **characterised in that** the axis of rotation (YY') of the driving cam (4, 4a, 4b) and the axis of rotation of the driving roller (6) are parallel.

6. Device for conveying parts (1) according to any of the preceding claims, **characterised in that** the feeding movement of the rail (3) corresponding to the zones (A, B, C) of the developed surface represents an angular sector of the driving cam (4, 4a, 4b) of between 200° and 300°, while the so-called "zone of backward movement" (D) represents an angular sector of between 60° and 160°.

7. Device for conveying parts (1) according to any of the preceding claims, **characterised in that**, when the driving cam (4, 4a, 4b) travels through a complete turn, the roller (6), and therefore the rail (3), are subjected to a forward movement corresponding to the zones (A, B, C) of the driving cam (4, 4a, 4b) during about two thirds of the turn, and then to a more abrupt backward movement during the last third of the turn, this movement of the rail (3) making it possible, because of the accelerating zone (A), to bring the rail (3) rapidly to the relative speed of displacement of the parts (2) (in relation to the frame) in order to accelerate them again before displacing them at constant speed during the feeding zone (B) in order to then allow them to slide during braking or the decelerating zone (C), then the backward movement (zone D) of the rail, which is carried out rapidly before beginning the cycle again.

8. Device for conveying parts (1) according to any of the preceding claims, **characterised in that** the driving cam (4, 4a, 4b) is controlled by a motorising device (7) which permits its rotation in both directions according to the user's choice.

9. Device for conveying parts (1) according to any of the preceding claims, **characterised in that** the driving cam (4, 4a, 4b) is sandwiched between two rollers (6a, 6b).

10. Device for conveying parts (1) according to claim 9, **characterised in that** the driving cam (4, 4a, 4b) is made up of two superposed cams, a first or upper cam (4a), with which a first roller (6a) cooperates, and a second or lower cam (4b) with which a second roller (6b) cooperates.

## Patentansprüche

1. Vorrichtung zum Transportieren von Teilen (1), die ein Transportelement (3) aufweist, auf dem die zu transportierenden Teile (2) angeordnet werden sollen, wobei das Transportelement (3) relativ zum Rahmen der Vorrichtung beweglich montiert ist, um von einer Antriebsvorrichtung (DE), die mindestens einen Antriebsnocken (4, 4a, 4b) aufweist, der mit mindestens einer Rolle (6, 6a, 6b) zusammenwirkt, die während der Verschiebung fest mit dem Transportelement verbunden ist, in der Ebene (P), in der die Teile (2) transportiert werden, zumindest in eine Hin- und Herbewegung versetzt zu werden, damit die Bewegung in der Ebene (P) eine hin- und hergehende Translationsbewegung ist, die durch die Drehung des Antriebsnockens (4, 4a, 4b) erzeugt wird, **dadurch gekennzeichnet, dass** der Antriebsnocken (4, 4a, 4b) eine Kurve mit abgewickelter Fläche aufweist, die einen ersten, sehr kurzen sogenannten Beschleunigungsbereich (A) und dann einen sogenannten Vorwärtsbereich (B) aufweist, in dem der Radius des Antriebsnockens (4, 4a, 4b) gleichmäßig über sein Winkelsegment ansteigt, sie weist anschließend einen kurzen Verzögerungsbereich (C) vor einem sogenannten Rückwärtsbereich (D) auf, in dem der Radius kleiner wird.

2. Vorrichtung zum Transportieren von Teilen (1) nach Anspruch 1, **dadurch gekennzeichnet, dass** das Transportelement eine kurvenförmige, kreisförmige oder spiralförmige Schiene (3) ist, deren Bewegung in der Ebene (P) eine hin- und hergehende Drehbewegung ist, die durch die Drehung des Antriebsnockens (4, 4a, 4b) erzeugt wird.

3. Vorrichtung zum Transportieren von Teilen (1) nach einem der vorhergehenden Ansprüche, **dadurch gekennzeichnet, dass** das Transportelement (3) von einer Halterung (5) des Transportelements (3) getragen wird, die eine Rolle (6, 6a, 6b) trägt, die sie entlang der Längsachse (XX') in eine Translationsbewegung versetzt, wenn sie mit dem Antriebsnocken (4, 4a, 4b) zusammenwirkt.

4. Vorrichtung zum Transportieren von Teilen (1) nach Anspruch 3, **dadurch gekennzeichnet, dass** sie eine Motorvorrichtung (7) aufweist, die den Antriebsnocken (4, 4a, 4b) um seine Drehachse (YY') herum in Drehung versetzt, wobei die Drehung des Antriebsnockens (4, 4a, 4b) aufgrund der jeweiligen Form der Kontaktfläche beim Zusammenwirken mit der Rolle (6, 6a, 6b) die hin- und hergehende Längsbewegung der Halterung (5) des Transportelements (3) bewirkt.

5. Vorrichtung zum Transportieren von Teilen (1) nach Anspruch 3 oder Anspruch 4, **dadurch gekennzeichnet, dass** die Drehachse (YY') des Antriebsnockens (4, 4a, 4b) und die Drehachse der Antriebsrolle (6) parallel sind.

6. Vorrichtung zum Transportieren von Teilen (1) nach einem der vorhergehenden Ansprüche, **dadurch gekennzeichnet, dass** die Vorwärtsbewegung der Schiene (3), die den Bereichen (A, B, C) der abgewickelten Fläche entspricht, ein Winkelsegment des Antriebsnockens (4, 4a, 4b) zwischen 200° und 300° darstellt, während der sogenannte Rückwärtsbereich (D) ein Winkelsegment zwischen 60° und 160° darstellt.

7. Vorrichtung zum Transportieren von Teilen (1) nach einem der vorhergehenden Ansprüche, **dadurch gekennzeichnet, dass**, wenn der Antriebsnocken (4, 4a, 4b) eine ganze Umdrehung ausführt, die Rolle (6) und damit die Schiene (3) während etwa zwei Dritteln der Umdrehung eine Vorwärtsbewegung erfahren, die den Bereichen (A, B, C) des Antriebsnockens (4, 4a, 4b) entspricht und anschließend eine sehr abrupte Rückwärtsbewegung während des letzten Drittels der Umdrehung erfahren, wobei durch diese Bewegung der Schiene (3) die Schiene (3) aufgrund des Beschleunigungsbereichs (A) schnell auf die Relativgeschwindigkeit zur Verschiebung der Teile (2) (relativ zum Rahmen) gebracht wird, um sie weiter zu beschleunigen, bevor sie im Vorwärtsbereich (B) mit gleichmäßiger Geschwindigkeit verschoben werden, um sie anschließend während des Abbremsens oder im Verzögerungsbereich (C) und dann während des Rücklaufs (Bereich D) der Schiene rutschen zu lassen, der schnell erfolgt, bevor der Arbeitstakt von vorn beginnt.

8. Vorrichtung zum Transportieren von Teilen (1) nach einem der vorhergehenden Ansprüche, **dadurch gekennzeichnet, dass** der Antriebsnocken (4, 4a, 4b) von einer Motorvorrichtung (7) gesteuert wird, mit der er in beide Richtungen gedreht werden kann, je nachdem, was der Benutzer wählt.

9. Vorrichtung zum Transportieren von Teilen (1) nach einem der vorhergehenden Ansprüche, **dadurch gekennzeichnet, dass** der Antriebsnocken (4, 4a, 4b) zwischen zwei Rollen (6a, 6b) eingeschlossen ist.

10. Vorrichtung zum Transportieren von Teilen (1) nach Anspruch 9, **dadurch gekennzeichnet, dass** der Antriebsnocken (4) aus zwei übereinanderliegenden Nocken gebildet ist, einem ersten Nocken oder oberen Nocken (4a), mit dem eine erste Rolle (6a) zusammenwirkt, und einem zweiten Nocken oder unteren Nocken (4b), mit dem eine zweite Rolle (6b) zusammenwirkt.
